# EUROPÄISCHE PATENTSCHRIFT

(11) **EP 1 714 799 B1**
(45) Veröffentlichungstag und Bekanntmachung des Hinweises auf die Patenterteilung: **23.07.2008**
(21) Anmeldenummer: 06005353.5
(22) Anmeldetag: 16.03.2006
(51) Int. Cl.: B60B 33/02

(54) **Rolle mit einer Bremseinrichtung**
Castor with brake device
Roulette avec système de freinage

(30) Priorität: 21.04.2005 DE 202005006433 U; 21.04.2005 DE 202005006434 U
(43) Veröffentlichungstag der Anmeldung: 25.10.2006
(73) Patentinhaber: Blickle Räder + Rollen GmbH & Co.KG, 72348 Rosenfeld (DE)
(72) Erfinder:
(74) Vertreter: Säger, Manfred

(56) Entgegenhaltungen:
- DE-A1- 3 624 089
- DE-U1- 29 708 693
- GB-A- 695 213

## Beschreibung

Die Erfindung betrifft eine gattungsgemässe Rolle mit einer Bremseinrichtung nach dem Oberbegriff des Hauptanspruchs, also eine Rolle mit einer Bremseinrichtung mit einem in seiner Achsrichtung entgegen der Kraft einer Feder bewegbaren und die Lagerschalen mittig durchquerenden Bolzen, der an seinem rückwärtigen Ende zwecks Bremsung von zumindest einem Betätigungsglied betätigbar und dabei vorwärts in Achsrichtung so verschiebbar ist, dass er mit einem an seinem zu dem rückwärtigen Ende entgegengesetzt angeordneten vorderen Ende vorgesehehen Bremselement am Umfang eines in einer U-förmigen Gabel der Rolle gehalterten Rades zwecks Bremsung desselben zur Anlage kommt.

Solche Rollen sind an sich bekannt (DE-U 297 08 693). Sie werden beispielsweise an der Unterseite von Containern, beispielsweise Müllcontainern angebracht und weisen z.B. über eine zentrale Stangeneinrichtung steuerbare Bremsvorrichtung für zumindest zweier Gruppen von Rollen auf. Mittels eines Nockens der Bremsvorrichtung wird auf den Kopf eines die Lagerschalen mittig durchquerenden Bolzens gedrückt. Dieser weist an seinem entgegengesetzten Ende ein Bremselement auf, welches am Umfang des Rades zur Anlage kommt, das in einer U-förmigen Gabel der Rolle gehaltert ist. Hierbei kann der Bolzen verdrehfest und nur längs seiner Achsrichtung beweglich gehaltert. Dabei kann die Bremseinrichtung als sogenannte Feststellbremse zwecks dauerhafter Arretierung oder als Fahrbremse während der Bewegung der Rolle, also im Betrieb des Containers ausgebildet sein, um dessen Geschwindigkeit herabzusetzen.

Von Nachteil bei dieser bekannten Ausführungsform ist die Tatsache, dass die Bremseinrichtung entweder nur als Feststellbremse oder aber nur als Fahrbremse ausgebildet ist, was den Einsatz der bekannten Rolle einschränkt.

Der Erfindung liegt deshalb die Aufgabe zugrunde, die Bremseinrichtung der gattungsgemässen Rolle zugleich sowohl als Feststellbremse als auch als Fahrbremse auszubilden.

Diese Aufgabe wird erfindungsgemäß bei einer gattungsgemässen Rolle nach dem Oberbegriff des Hauptanspruchs erfindungsgemäss durch dessen kennzeichnende Merkmale, also dadurch gelöst, dass die Bremseinrichtung einen um eine Achse kippbaren Hebel aufweist, dass das Betätigungsglied an einem Hebelarm des Hebels angreift, dass dieser beim Kippen um die Achse das rückwärtige Ende des Bolzens betätigt und dass ein an dem Hebel angreifendes weiteres Betätigungsglied vorgesehen ist.

Es ist zwar eine gatungsgemässe Rolle nach dem Oberbegriff des Hauptanspruchs bekannt (DE 36 24 089 A1), bei der das Betätigungsglied an einem Hebelarm des Hebels angreift und dieser beim Kippen um die Achse das rückwärtige Ende des Bolzens betätigt; allerdings liegt das Betätigungsglied im Drehpunkt des Hebels und ist über eine gesonderte Welle betätigbar, wodurch die Rolle aufwendiger wird.

Hierdurch bedingt ist es erfindungsgemäss möglich, mittels zweier verschiedener Bremshebel, z.B. mittels eines mit dem Fuss zu betätigenden Feststellbremshebels und mittels eines Fahrbremshebels, z. B. in Form eines Handbremshebels über den Hebel auf ein und denselben Bolzen der Bremseinrichtung einzuwirken. Eine solche Rolle nach Lehre der Erfindung ist universeller einsetzbar.

Weitere zweckmäßige Ausgestaltungen und Weiterbildung der Erfindung sind in den Unteransprüchen gekennzeichnet.

Ein Ausführungsbeispiel der Erfindung wird nachfolgend unter Bezugnahme auf die Zeichnung näher erläutert. In dieser zeigt:
- Figur 1:: eine erste Ausfürungsform der erfindungsgemässen Rolle, ungebremst, im schematischen Querschnitt
- Figur 2:: die Rolle gemäss Figur 1, mit betätigter Feststellbremse
- Figur 3:: die Rolle gemäss Figur 1, mit betätigter Fahrbremse und
- Figur 4:: eine zweite Ausfürungsform der Rolle, mit betätigter Fahrbremse, im schematischen Querschnitt.

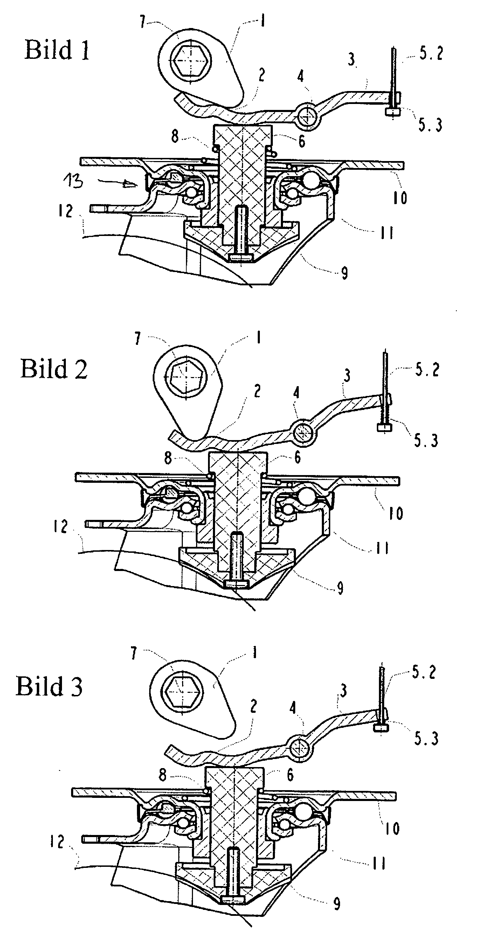

Die schematisch in Figur 1 angedeutet dargestellte Rolle mit einer Bremseinrichtung weist eine insgesamt mit 10 bezeichnete Bodenplatte zum Anbau beispielsweise an der Unterseite von Containern wie Müllcontainern auf. An der Bodenplatte 10 sind zueinander drehbare Lagerschalen 13 für die beim wiedergegebenen Ausführungsbeispiel als Lenkrolle ausgebildete Rolle vorgesehen. An einer davon ist eine U-förmig ausgebildete Gabel 11 zur Aufnahme des Rades 12 festgelegt.

Die Lagerschalen 13 der Rolle sind mittels eines sie zentrisch durchgreifenden Aufnahmeteils, vorzugsweise einem Hohlniet zusammengehalten. Dieses und damit die Lagerschalen 13 sind mittig von einem Bolzen 6 durchquert, der in seiner Achsrichtung entgegen der Kraft einer Feder 8 bewegbar ist, welche den Bolzen 6 in seine ungebremste Lage schiebt. Der Bolzen 6 ist an seinem rückwärtigen Ende zwecks Bremsung von einem als Nocken 1 ausgebildeten Betätigungsglied betätigbar und dabei vorwärts in der Achsrichtung so verschiebbar (Figur 2), dass er mit einem an seinem zu dem rückwärtigen Ende entgegengesetzt angeordneten vorderen Ende vorgesehehen Bremselement 9 am Umfang des in der U-förmigen Gabel 11 der Rolle gehalterten Rades 12 zwecks Bremsung desselben zur Anlage kommt. Der Nocken sitzt auf einer Betätigungswelle 7 und wird durch deren Drehung, bspw. infolge der Betätigung eines Feststellbremshebels z.B. mit dem Fuss im Uhrzeigersinn verschwenkt.

Die Bremseinrichtung der Rolle weist einen um eine Achse 4 kippbaren, zwischen dem Nocken 1 und dem Bolzen 6 vorgesehenen und als zweiarmiger Kipphebel 3 ausgebildeten Hebel auf, dessen einerseits der Achse 4 befindlicher einer Hebelarm im Bereich des an ihm angreifenden Nockens 1 mit einer Gleitkontur 2 versehen ist und der von dem Bolzen 6 in seine Neutrallage (Figur 1) geschoben ist. Die Gleitkontur 2 ist mit einer Mulde zur Übertotpunktblockierung des Nockens 1 unter Bildung einer Feststellbremse ausgebildet (Figur 2).

Es ist ferner bei der ersten Ausführungsform ein weiteres als Seilzug 5.2 ausgebildetes Betätigungsglied vorgesehen, das an dem auf der anderen Seite der Achse 4 befindlichen anderen Hebelarm des Kipphebels 3 über eine Schraubenfeder 5.3 angreift, die in der ungebremsten Neutrallage des Kipphebels 3 gespannt und in der Übertotpunktblockierung des Nockens 1 bei betätigter Feststellbremse (Figur 2) entspannt ist. Wird diese gelöst und wird der -nicht dargestellte- Fahrbremshebel, z. B. in Form eines Handbremshebel betätigt, so wird der Kipphebel 3 bei gespannter Schraubenfeder 5.3, wie auch beim Betätigen der Feststellbremse nach Figur 2 um die Achse 4 im Gegenuhrzeigersinn in die in Figur 3 gezeigte Fahrbremslage verschwenkt.

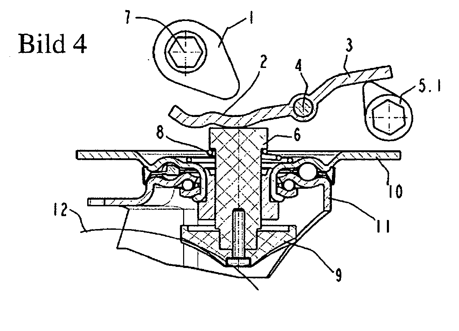

In alternativer -zweiter- Ausführungsform der Rolle kann das weitere Betätigungsglied an mit Bezug auf die Achse 4 dem anderen Hebelarm des Kipphebels 3 angreifender weiterer Nocken 5.1 ausgebildet sein (Figur 4). Zugleich sind der Nocken 1 und der weiterere Nocken 5.1, bezogen auf den Kipphebel 3 auf dessen verschiedenen Seiten, nämlich Vorder- oder Rückseite angeordnet. Die Funktion entspricht jedoch der ersten Ausführungsform.

## Patentansprüche

1. Rolle mit einer Bremseinrichtung mit einem in seiner Achsrichtung entgegen der Kraft einer Feder (8) bewegbaren und die Lagerschalen (13) mittig durchquerenden Bolzen (6), der an seinem rückwärtigen Ende zwecks Bremsung von zumindest einem Betätigungsglied (1) betätigbar und dabei vorwärts in Achsrichtung so verschiebbar ist, dass er mit einem an seinem zu dem rückwärtigen Ende entgegengesetzt angeordneten vorderen Ende vorgesehehen Bremselement (9) am Umfang eines in einer U-förmigen Gabel (11) der Rolle gehalterten Rades (12) zwecks Bremsung desselben zur Anlage kommt, wobei die Bremseinrichtung einen um eine Achse (4) kippbaren Hebel (3) aufweist, **dadurch gekennzeichnet dass** das Betätigungsglied (1) an einem Hebelarm des Hebels (3) angreift, dass dieser beim Kippen um die Achse (4) das rückwärtige Ende des Bolzens (6) betätigt und dass ein an dem Hebel (3) angreifendes weiteres Betätigungsglied (5.1, 5.2) vorgesehen ist.

2. Rolle nach Anspruch 1, **dadurch gekennzeichnet, dass** der Hebel (3) als zweiarmiger Kipphebel ausgebildet ist.

3. Rolle nach Anspruch 2, **dadurch gekennzeichnet, dass** das Betätigungsglied an dem einem Hebelarm des Kipphebels (3) und das weitere Betätigungsglied an dem auf der anderen Seite der Achse (4) befindlichen anderen Hebelarm des Kipphebels (3) angreift.

4. Rolle nach einem der Ansprüche 1 bis 3, **dadurch gekennzeichnet, dass** das Betätigungsglied als an dem einem Hebelarm des Kipphebels (3) angreifender Nocken (1) ausgebildet ist.

5. Rolle nach Anspruch 4, **dadurch gekennzeichnet, dass** der eine Hebelarm des Kipphebels (3) im Bereich des an ihm angreifenden Nockens (1) mit einer Gleitkontur ausgebildet ist.

6. Rolle nach Anspruch 5, **dadurch gekennzeichnet, dass** dass die Gleitkontur des einen Hebelarms des Kipphebels (3) mit einer Mulde zur Übertotpunktblockierung des Nockens (1) unter Bildung einer Feststellbremse ausgebildet ist.

7. Rolle nach einem der Ansprüche 1 bis 3, **dadurch gekennzeichnet, dass** das weitere Betätigungsglied als an dem anderen Hebelarm des Kipphebels (3) angreifender weiterer Nocken (5.1) ausgebildet ist.

8. Rolle nach Anspruch 4, **dadurch gekennzeichnet, dass** zwischen dem Nocken (1) und dem Bolzen (6) der Kipphebel (3) vorgesehen ist.

9. Rolle nach Anspruch 7 oder 8, **dadurch gekennzeichnet, dass** der Nocken (1) und der weiterere Nocken (5.1) bezogen auf den Kipphebel (3) auf verschiedenen Seiten angeordnet sind.

10. Rolle nach einem der Ansprüche 1 bis 3, **dadurch gekennzeichnet, dass** das weitere Betätigungsglied als an dem anderen Hebelarm des Kipphebels (3) angreifender Seilzug (5.2) ausgebildet ist.

11. Rolle nach Anspruch 10, **dadurch gekennzeichnet, dass** der Seilzug (5.2) an dem anderen Hebelarm des Kipphebels (3) über eine Schraubenfeder (5.3) angreift.

12. Rolle nach Anspruch 9, **dadurch gekennzeichnet, dass** der eine Hebelarm des Kipphebels (3) im Bereich des an ihm angreifenden Nockens (1) mit einer Gleitkontur ausgebildet ist.

## Claims

1. Castor with a brake device comprising a pin (6) movable in its axial direction against the force of a spring (8) and passing through the centre of the bearing shells (13), the rear end of which can be activated by at least one activation element (1) for the purpose of braking and which can, in this context, be displaced forwards in the axial direction in such a manner that, with a brake element (9) provided at its front end disposed opposite to the rear end, it comes into contact with the periphery of a wheel mounted in a U-shaped fork (11) of the castor thereby braking the said wheel, wherein the brake device provides a lever (3) capable of being tilted about an axis (4),
**characterised in that**
the activation element (1) engages with a lever arm of the lever (3); that, when tilted about its axis (4), the lever activates the rear end of the pin (6); and that a further activation element (5.1, 5.2) engaging with the lever (3) is provided.

2. Castor according to claim 1,
**characterised in that**
the lever (3) is designed as two-arm tilting lever.

3. Castor according to claim 2,
**characterised in that**
the activation element engages with the one lever arm of the tilting lever (3), and the further activation element engages with the other lever arm of the tilting lever (3) disposed at the other end of the axis (4).

4. Castor according to any one of claims 1 to 3
**characterised in that**
the activation element is designed as a cam (1) engaging with the one lever arm of the tilting lever (3).

5. Castor according to claim 4,
**characterised in that**
the one lever arm of the tilting lever (3) is designed with a sliding contour in the region of the cam (1), with which it engages.

6. Castor according to claim 5,
**characterised in that**
the sliding contour of the one lever arm of the tilting lever (3) is designed with an indentation for a beyond-dead-centre blocking of the cam (1) thereby forming a locking brake.

7. Castor according to any one of claims 1 to 3,
**characterised in that**
the further activation element is designed as a further cam (5.1) engaging with the other lever arm of the tilting lever (3).

8. Castor according to claim 4,
**characterised in that**
the tilting lever (3) is provided between the cam (1) and the pin (6).

9. Castor according to claim 7 or 8,
**characterised in that**
the cam (1) and the further cam (5.1) are disposed at different ends of the tilting lever (3).

10. Castor according to any one of claims 1 to 3,
**characterised in that**
the further activation element is designed as a rope pull (5.2) engaging with the other lever arm of the tilting lever (3).

11. Castor according to claim 10,
**characterised in that**
the rope pull (5.2) engages with the other lever arm of the tilting lever (3) via a helical spring (5.3).

12. Castor according to claim 9,
**characterised in that**
the first lever arm of the tilting lever (3) is designed with a sliding contour in the region of the cam (1), with which it engages.

## Revendications

1. Roulette équipée d'un système de frein, comportant un boulon (6) mobile dans sa direction axiale à l'encontre de la force d'un ressort (8) et traversant les coussinets de palier (13) en leur milieu, qui peut être actionné à son extrémité arrière pour le freinage par au moins un organe de commande (1) et peut ainsi être déplacé vers l'avant en direction axiale de telle manière qu'il vient, par un élément de freinage (9) prévu à son extrémité avant disposée à l'opposé de l'extrémité arrière, en appui sur la circonférence d'une roue (12) maintenue dans un étrier (11) en U de la roulette afin de freiner ladite roue, le système de frein présentant un levier (3) pouvant basculer autour d'un axe (4), **caractérisée en ce que** l'organe de commande (1) vient en prise avec un bras de levier du levier (3), **en ce que** ce dernier actionne l'extrémité arrière du boulon (6) lors du basculement autour de l'axe (4), et **en ce qu'**est prévu un autre organe de commande (5.1, 5.2) venant en prise avec le levier (3).

2. Roulette selon la revendication 1, **caractérisée en ce que** le levier (3) est réalisé sous la forme d'un levier basculant à deux bras.

3. Roulette selon la revendication 2, **caractérisée en ce que** l'organe de commande vient en prise avec le un bras de levier du levier basculant (3) et l'autre organe de commande vient en prise avec l'autre bras de levier du levier basculant (3) se trouvant de l'autre côté de l'axe (4).

4. Roulette selon une des revendications 1 à 3, **caractérisée en ce que** l'organe de commande est réalisé sous la forme d'une came (1) venant en prise avec le un bras de levier du levier basculant (3).

5. Roulette selon la revendication 4, **caractérisée en ce que** le un bras de levier du levier basculant (3) est réalisé pour présenter un contour lisse dans la zone de la came (1) venant en prise avec lui.

6. Roulette selon la revendication 5, **caractérisée en ce que** le contour lisse du un bras de levier du levier basculant (3) est réalisé par un creux pour le blocage du point mort haut de la came (1) en formant un frein d'immobilisation.

7. Roulette selon une des revendications 1 à 3, **caractérisée en ce que** l'autre organe de commande est réalisé sous la forme d'une autre came (5.1) venant en prise avec l'autre bras de levier du levier basculant (3).

8. Roulette selon la revendication 4, **caractérisée en ce que** le levier basculant (3) est prévu entre la came (1) et le boulon (6).

9. Roulette selon la revendication 7 ou 8, **caractérisée en ce que** la came (1) et l'autre came (5.1) sont disposées sur des côtés différents par rapport au levier basculant (3).

10. Roulette selon une des revendications 1 à 3, **caractérisée en ce que** l'autre organe de commande est réalisé sous la forme d'un tirant à câble (5.2) venant en prise avec l'autre bras de levier du levier basculant (3).

11. Roulette selon la revendication 10, **caractérisée en ce que** le tirant à câble (5.2) entre en prise avec l'autre bras de levier du levier basculant (3) par l'intermédiaire d'un ressort hélicoïdal (5.3).

12. Roulette selon la revendication 9, **caractérisée en ce que** le un bras de levier du levier basculant (3) est réalisé pour présenter un contour lisse dans la zone de la came (1) venant en prise avec lui.
